# EUROPEAN PATENT SPECIFICATION

(11) **EP 1 067 301 B1**
(45) Date of publication and mention of the grant of the patent: **01.10.2003**
(21) Application number: 00114295.9
(22) Date of filing: 04.07.2000
(51) Int. Cl.: F16C 33/78

(54) **Sealing device for a rolling bearing**
Dichtungseinrichtung für ein Wälzlager
Dispositif d'étanchéité pour un palier à roulement

(30) Priority: 06.07.1999 JP 19117099
(43) Date of publication of application: 10.01.2001
(73) Proprietor: Koyo Seiko Co., Ltd., Osaka-City (JP)
(72) Inventor: Fujimoto, Kazuya, c/o Koyo Seiko Co. Ltd., Osaka-shi (JP)
(74) Representative: GROSSE BOCKHORNI SCHUMACHER

(56) References cited:
- EP-A- 0 458 122
- DE-A- 4 312 364
- DE-A- 19 709 056
- FR-A- 1 139 430
- GB-A- 1 489 801
- US-A- 4 434 985
- US-A- 4 596 394

## Description

### BACKGROUND OF THE INVENTION

The invention relates to a sealing device for a rolling bearing, and more particularly to a sealing device for a rolling bearing for a roll neck in a rolling machine.

Such a sealing device as defined in the first part of claim 1 is known from FR 1 139 430 A.

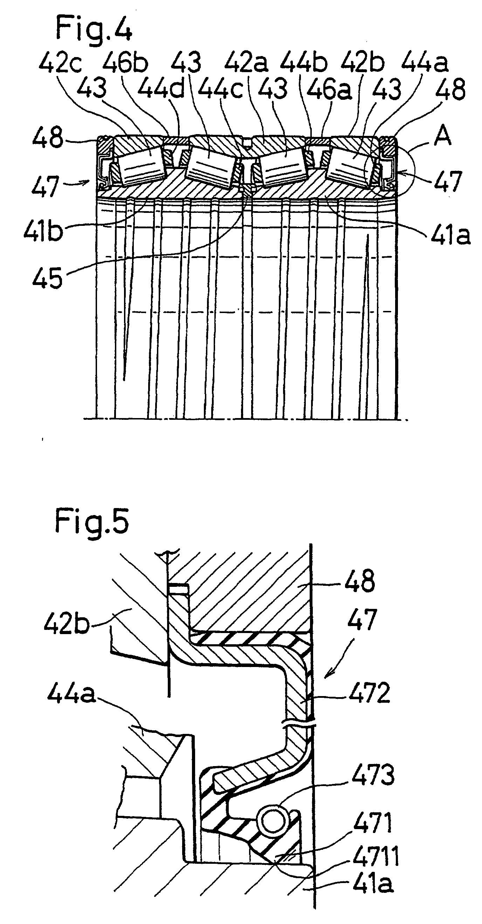

As a rolling bearing for supporting a roll neck of a work roll or a backing-up roll in a rolling machine, generally, a multi-row tapered roller bearing is used. Fig. 4 is a section view of an example of such a roller bearing. In the figure, 41a and 41b denote double-raceway inner races, 42a denotes a double-raceway outer race, and 42b and 42c denote single-raceway outer races, respectively. A plurality of tapered rollers 43 are disposed in each of four conical raceways formed between the inner and outer races. The tapered rollers 43 are held at regular intervals in a circumference direction by cages 44a to 44d in the conical raceways. An inner race spacer 45 is interposed between the double-raceway inner races 41a and 41b, and an outer race spacer 46 is interposed between the double-raceway outer race 42a and each of the single-raceway outer races 42b and 42c.

An annular sealing device 47 is attached to each of end portions of the bearing. In this example, the outer circumference portion of the sealing device 47 is attached between the outer race 42b (42c) at an end and a sealing cover (flange ring) 48 secured to the end face of the outer race. As shown in Fig. 5 which is an enlarged view of a portion A of Fig. 4, each of the sealing devices 47 is configured by integrating a sealing member 471 made of an elastic material such as a synthetic rubber, with an annular core 472. In the sealing member 471, a lip 4711 which is in contact with an outer circumference face in the vicinity of an end portion of the inner race 41a (41b) in the circumference direction is formed, and a garter spring (back-up ring) 473 is disposed on the outer circumference of the lip 4711.

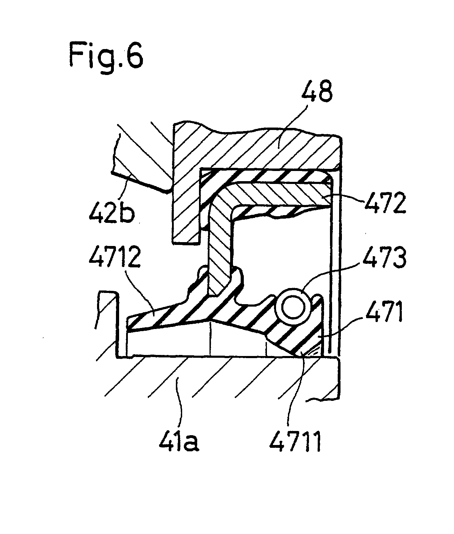

As another sealing device for such a type of rolling bearing, known is a device shown in Fig. 6 which is a section view of main portions. In addition to the lip 4711 which is in contact in the circumference direction with the outer circumference face of the inner race in the same manner as the above-mentioned example, a sub lip 4712 is formed on the inner side of the lip. The sub lip 4712 is configured so as not to be in contact with the inner race 41a (41b) in a normal condition, and exerts the sealing performance due to the labyrinth effect.

In a rolling bearing for supporting a roll neck of a work roll or a backing up roll in a rolling machine, a large amount of rolling water for cooling splashes the surroundings during the use of the rolling bearing. It is difficult to say that the sealing devices of the prior art shown in Figs. 5 and 6 have a sufficient sealing function in such a using environment. The sealing devices of the prior art involve a problem in that rolling water easily enters the inside of a bearing. If rolling water enters the inside of a bearing, the lubricity is significantly deteriorated, and the life time is shortened.

### SUMMARY OF THE INVENTION

The invention has been conducted in view of the above-mentioned circumstances. It is an object of the invention to provide a sealing device for a rolling bearing in which, when the sealing device is attached to a bearing for a roll neck in a rolling machine, rolling water hardly enters the inside of the bearing as compared with a prior art sealing device, and the life time of the bearing can be therefore improved as compared with the prior art.

In order to attain the above object, the sealing device according to claim 1 is proposed.

According to the invention, the sub lip is disposed on the inner side of the main lip, the sub lip is in contact with the outer end face of the flange portion of the inner race, and the annular grease pool is independently formed between the sub lip and the main lip, thereby suppressing invasion of rolling water.

Specifically, the sub lip is positioned on the inner side of the main lip, and the sub and main lips are in contact with the inner race. An annular space which is closed to the outside is formed between the lips in cooperation with the inner race. The annular space is used as a grease pool, and the inside thereof is filled with grease. Accordingly, rolling water splashing from the outside can enter the inside of the bearing, only after the water passes through all of the contact portion between the main lip and the inner race, the annular grease pool, and the sub lip. As compared with a sealing device of the prior art which includes only a main lip, or the main lip and a sub lip for producing a labyrinth effect, therefore, the sealing performance against rolling water is greatly improved.

The sub lip constitutes a so-called face seal in which the side face of the sub lip is in contact with the outer end face of the flange portion of the inner race, so that heat generation and hardening caused by the contact of the sub lip with the inner race can be suppressed.

### BRIEF DESCRIPTION OF THE DRAWINGS

Fig. 1 is an axial section view showing the whole configuration of a rolling bearing for a roll neck in a rolling machine to which the sealing device of the invention is attached;
Fig. 2 is an enlarged view of a portion A in Fig. 1;
Fig. 3 is a section view of main portions of another embodiment of the invention;
Fig. 4 is a section view showing an example of the configuration of a usual rolling bearing for supporting a roll neck of a work roll or a backing-up roll in a rolling machine;
Fig. 5 is an enlarged view of a portion A in Fig. 4; and
Fig. 6 is a section view of main portions of another example of the configuration of a sealing device used for a bearing for a roll neck in a rolling machine.

### DETAILED DESCRIPTION OF THE PREFERRED EMBODIMENTS

Hereinafter, preferred embodiments of the invention will be described with reference to the accompanying drawings.

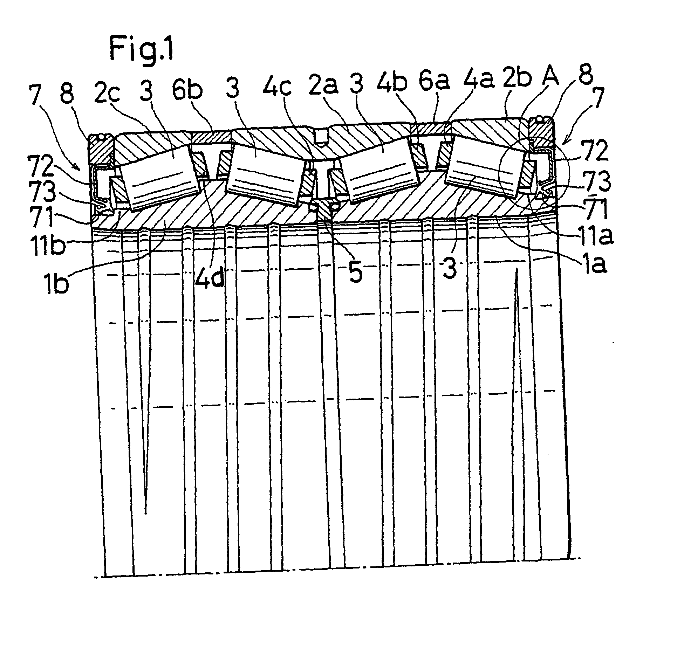

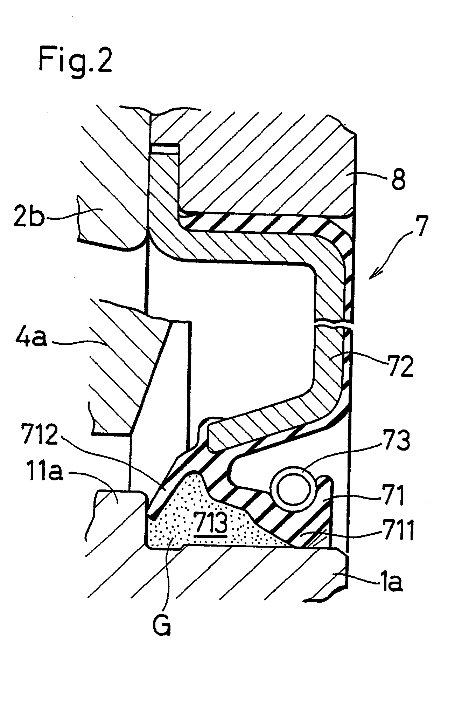

Fig. 1 is an axial section view showing the whole configuration of a rolling bearing for a roll neck in a rolling machine to which the sealing device according to the invention is attached, and Fig. 2 is an enlarged view of a portion A in Fig. 1.

In the embodiment, the rolling bearing is a 4-row tapered roller bearing, and structured in a manner equivalent to the roller bearing of the prior art exemplarily shown in Fig. 5.
The rolling bearing includes two double-raceway inner races 1a and 1b, one double-raceway outer race 2a, and two single-raceway outer races 2b and 2c on both sides thereof. A plurality of tapered rollers 3 are disposed in each of four conical raceway tracks formed between these inner and outer races. The tapered rollers 3 are held at regular intervals in a circumference direction by cages 4a to 4d in the conical raceways. An inner race spacer 5 is interposed between the double-raceway inner races 1a and 1b, and outer race spacers 6a and 6b are interposed between the double-raceway outer race 2a, and the single-raceway outer races 2b and 2c.

An annular sealing device 7 is attached to each of end portions of the bearing. The sealing device 7 is configured by a sealing member 71 made of an elastic member such as a synthetic rubber, an annular core 72 which is integrated with the sealing member, and a garter spring 73. An engaging edge 721 which outward protrudes is formed in an outer circumference portion of the core 72. The engaging edge 721 is pressed between the corresponding one of the single-raceway outer races 2b and 2c positioned on both end portions of the bearing, and a sealing cover (flange ring) 8 secured to the corresponding outer end face portion, so that the sealing device 7 is attached to the bearing.

In the sealing member 71, on an inner circumference side, a main lip 711 is formed on a further outer side than a flange portion 11a (11b) formed in the vicinity of an end portion of the inner race 1a (1b). The main lip 711 is in contact with an outer circumference face of the inner race 1a (1b). The garter spring 73 is disposed on an outer circumference of the main lip 711.

On an axially inner side of the main lip 711, a sub lip 712 is formed so as to elongate in parallel to the main lip 711 and to be separated from the main lip by a predetermined distance. A side face portion of the sub lip 712 is in contact with the outer end face of the above-mentioned flange portion 11a (11b) of the inner race 1a (1b), thereby constituting a so-called face seal. Since the thickness of the sub lip 712 is very thin as compared with the amount of projection from the main portion of the sealing member 71, the sub lip 712 is extremely softly in contact with the outer end face of the flange portion 11a (11b) of the inner race 1a (1b).

An annular space elongating in the circumference direction of the bearing is formed between the main lip 711 and the sub lip 712. The annular space is used as a grease pool 713. That is, during the work of incorporating the rolling bearing into a roll neck in a rolling machine, an appropriate amount of grease is supplied to the inside of the four conical raceway tracks formed between the inner and outer races, and the grease pool 713 of the sealing device 7 attached to each of the ends of the bearing is filled with grease G.

According to the above-described embodiment of the invention, in the condition that the rolling bearing is incorporated into a roll neck of a rolling machine, rolling water splashing toward the bearing is first prevented from entering the inside of the bearing by the main lip 711 which is in contact with the outer circumference face of the inner race 1a (1b). The rolling water which passes over the main lip 711 is next prevented from entering the inside of the bearing by the grease G which is charged into the annular grease pool 713 formed between the main lip 711 and the sub lip 712. Furthermore, the rolling water entering the grease G is prevented from entering the inside of the bearing by the sub lip 712 which is in contact with the outer end face of the flange portion 11a (11b) of the inner race 1a (1b). Thus, very high invasion preventing performance against the water from the outside can be attained.

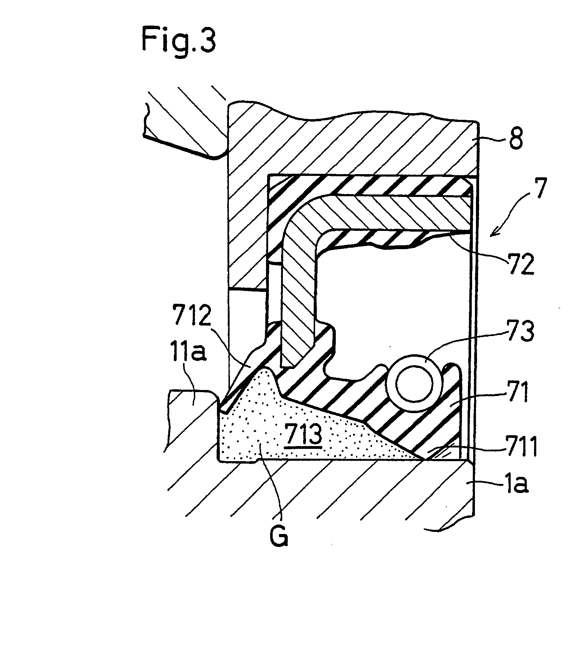

As for the structure of the details except the main lip 711, the sub lip 712, and the grease pool 713 formed between the lips, the invention is not limited to that which is adopted in the above-mentioned embodiment. As shown in Fig. 3 which is a section view of main portions of another embodiment of the invention, for example, the following structure may be adopted. The stopping edge is not provided, and the core 72 is formed so as to have a substantially U-shaped section, and the outer circumference face of the core 72 is pressingly fitted into the inner circumference face of the sealing cover 8, whereby the core is attached to the bearing.

As described above, according to the invention, in the sealing device in which an outer circumference portion is attached to an outer race side, and a main lip which is in contact with an outer circumference face of an inner race is formed in an inner circumference portion, a sub lip is formed on an inner side of the main lip with being separated from the main lip by a predetermined distance, a side face of the sub lip is in contact with an outer end face of a flange portion which is formed in the vicinity of the end portion of the inner race, and an annular grease pool is formed between the sub lip and the main lip. Therefore, rolling water splashing from the outside in the using condition that the bearing is attached to a roll neck of a rolling machine is prevented from entering the inside of the bearing by the sequence of the main lip, the grease which is charged into the annular grease pool, and the sub lip. Accordingly, as compared with a sealing device having only a main lip which is conventionally used for this type of bearing, or a sealing device, in addition to a main lip, having a sub lip for the purpose of a labyrinth effect, the invasion preventing effect against rolling water is greatly improved, and the life time of the bearing can be therefore improved.

## Claims

1. A sealing device (7) for a rolling bearing which is an annular sealing device to be disposed in an end face portion of a bearing for a roll neck in a rolling machine, including an annular core (72) wherein an outer circumference portion including a cylindrical ring of the annular core (72) is held on an outer race side, a disc-like ring of the annular core (72) extends in an inward radial direction and is disposed in one end portion of said cylindrical ring, a main elastic lip (711) which is in contact in a circumference direction with an outer circumference face in the vicinity of an end portion of an inner race (1 a) is formed in an inner circumference portion of the disc-like ring of said annular core (72), a sub elastic lip (712) is protrudingly formed on an axially inner side of said main elastic lip (711) separated from said main elastic lip (711) by a predetermined distance,
**characterized in that** the inner circumference portion includes a smaller-diameter end portion of the disk-like ring, the sub elastic lip is directed from said smaller-diameter end portion of said disk-like ring toward an inner circumference, said sub elastic lip (712) has a thickness which is smaller than a thickness of an axial section of said main elastic lip (711), said sub elastic lip (712) is shorter than said main elastic lip, a side face portion of said sub elastic lip (712) is in slight contact in a circumference direction with an outer end face of a flange portion (11a) in the vicinity of the end portion of the inner race (1a), and an annular grease pool is formed between said sub elastic lip (712) and said main elastic lip (711).

## Patentansprüche

1. Dichtungseinrichtung (7) für ein Wälzlager, wobei es sich um eine ringförmige Dichtungseinrichtung handelt, die in einem Stimflächenabschnitt eines Lagers für einen Walzenzapfen in einer Walzmaschine angeordnet werden kann und einen ringförmigen Kern (72) enthält,
wobei ein äußerer Umfangsabschnitt, der einen zylindrischen Ring des ringförmigen Kerns (72) enthält, auf der Seite eines äußeren Laufrings gehalten wird,
wobei sich ein scheibenartiger Ring des ringförmigen Kems (72) in einer Richtung radial einwärts erstreckt und in einem Stimabschnitt des zylindrischen Rings angeordnet ist,
wobei eine elastische Hauptlippe (711), die sich in einer Umfangsrichtung in Kontakt mit einer äußeren Umfangsfläche in der Nähe eines Stimabschnitts eines inneren Laufrings (1a) befindet, in einem inneren Umfangsabschnitt des scheibenartigen Rings des ringförmigen Kerns (72) ausgebildet ist,
wobei eine elastische Unterlippe (712) vorstehend auf einer axial inneren Seite der elastischen Hauptlippe (711), von der elastischen Hauptlippe (711) um einen vorbestimmten Abstand getrennt, ausgebildet ist,
**dadurch gekennzeichnet, dass** der innere Umfangsabschnitt einen Stirnabschnitt des scheibeartigen Rings mit kleinerem Durchmesser aufweist,
dass die elastische Unterlippe von dem Stimabschnitt des scheibenartigen Rings mit kleinerem Durchmesser aus in Richtung eines inneren Umfangs gerichtet ist,
dass die elastische Unterlippe (712) eine Dicke aufweist, die kleiner als die Dicke eines axialen Abschnitts der elastischen Hauptlippe ist (711) ist,
dass die elastische Unterlippe (712) kürzer als die elastische Hauptlippe ist,
dass ein Seitenflächenteil der elastischen Unterlippe (712) sich in einer Umfangsrichtung in der Nähe des Stimabschnitts des inneren Laufrings (1a) in leichtem Kontakt mit einer äußeren Stirnfläche eines Wangenabschnitts (11a) befindet, und
dass ein ringförmiges Schmiermittelbecken zwischen der elastischen Unterlippe (712) und der elastischen Hauptlippe (711) ausgebildet ist.

## Revendications

1. Dispositif d'étanchéité (**7**) pour un palier à roulement qui est un dispositif d'étanchéité annulaire destiné à être placé dans une partie de face d'extrémité d'un palier pour un tourillon central dans une enrouleuse, comprenant un noyau annulaire (**72**), dans lequel une partie de circonférence extérieure, comprenant une bague cylindrique du noyau annulaire (**72**), est tenue sur une face de voie de roulement extérieure ; une bague de type disque du noyau annulaire (**72**) s'étend dans une direction radiale vers l'intérieur et est placée dans une partie d'extrémité de ladite bague cylindrique ; une lèvre élastique principale (**711**), qui est en contact dans une direction circonférentielle avec une face circonférentielle extérieure au voisinage d'une partie d'extrémité d'une voie de roulement intérieure (**1a**), est formée dans une partie circonférentielle intérieure de la bague de type disque dudit noyau annulaire (**72**) ; une lèvre élastique secondaire (**712**) est formée en saillie sur une face axialement intérieure de ladite lèvre élastique principale (**711**), séparée d'une distance prédéterminée de ladite lèvre élastique principale (**711**),
**caractérisé en ce que** la partie circonférentielle intérieure comprend une partie d'extrémité de plus petit diamètre de la bague de type disque, la lèvre élastique secondaire est dirigée depuis ladite partie d'extrémité de plus petit diamètre de ladite bague de type disque en direction d'une circonférence intérieure, ladite lèvre élastique (**712**) ayant une épaisseur qui est inférieure à une épaisseur d'une section axiale de ladite lèvre élastique principale (**711**), ladite lèvre élastique secondaire (**712**) est plus courte que ladite lèvre élastique principale, une partie de face latérale de ladite lèvre élastique secondaire (**712**) est en contact étroit dans une direction circonférentielle avec une face d'extrémité extérieure d'une partie de bride (**11a**), au voisinage de la partie d'extrémité de la voie de roulement intérieure (**1a**), et un réservoir de graisse annulaire est formé entre ladite lèvre élastique secondaire (**712**) et ladite élastique principale (**711**).
